# NEUE EUROPÄISCHE PATENTSCHRIFT

(11) **EP 0 141 032 B2**
(45) Veröffentlichungstag und Bekanntmachung des Hinweises auf die Entscheidung über den Einspruch: **07.01.1993**
(45) Hinweis auf die Patenterteilung: 10.05.1989
(21) Anmeldenummer: 84107672.2
(22) Anmeldetag: 03.07.1984
(51) Int. Cl.: B29C 71/02, B29C 35/02, C22F 1/04, B32B 15/08

(54) **Verfahren und Vorrichtung zur Aushärt-Behandlung von kunststoffkaschierten Metallfolien, insbesondere Aluminiumfolien**
Method of and device for curing plastic-covered metal foils, in particular aluminium foils
Procédé et dispositif pour cuire des feuilles métalliques laminées de matière plastique en particulier des feuilles en aluminium

(30) Priorität: 24.09.1983 DE 3334692
(43) Veröffentlichungstag der Anmeldung: 15.05.1985
(73) Patentinhaber: Uhde GmbH, 44141 Dortmund (DE)
(72) Erfinder: Schulte zu Sodingen, Klaus, Dipl.-Ing., D-6270 Idstein-Walsdorf (DE); Schröfel, Hermann, D-6272 Niedernhausen (DE)
(74) Vertreter: Patentanwälte Meinke, Dabringhaus und Partner

(56) Entgegenhaltungen:
- DE-A- 1 621 950
- DE-A- 1 646 218
- DE-C- 756 364
- FR-A- 2 289 589
- GB-A- 1 569 005
- US-A- 1 738 038
- US-A- 2 237 659
- US-A- 4 000 009
- PATENTS ABSTRACTS OF JAPAN, Band 6, Nr. 127, (C-113)(1005), 13. Juli 1982
- Henkel, "Verarbeitungshinweise zur Verbundfolienkaschierung mit Liofol UK-Kaschierklebstoffen", Düsseldorf, Januar 1982, Seite 1
- Sonderdruck aus "Verpackungs- Rundschau", Heft 7/1974
- Zeitschrift "Coating", Heft 8/74, Seiten 208 und 210

## Beschreibung

Die Erfindung richtet sich auf ein Verfahren zur Aushärt-Behandlung von kunststoffbeschichteten Metallfolien, insbesondere von polypropylenkaschierten Aluminiumfolien, wobei die Folien zu Coils gewickelt sind.

Es ist bekannt, derartige Coils bei Umgebungstemperutur zu lagern, (Henkel-Broschüre 1982 "Verarbeitungshinweise für Verbundfolienkaschierung ... "; Z.: "Coating ", 8/74, S. 208-211). Die Aushärtzeit beträgt dabei ca. 7 Tage. Diese Aushärtzeit bedingt zum einen eine sehr große Lagerkapazität und führt nicht immer zu den gewünschten Qualitäten, da durch Temperaturschwankungen, schnelle Abkühlzeiten o. dgl., die Haftfestigkeit zwischen der Kunststoffbeschichtung und dem Aluminium nicht immer gegeben ist.
(Z.: "Verpackungsrundschau", 7/74, "Kaschierung von Aluminumfolien mit Polyurethanklebern"). Dabei ist es auch bekannt, daß die Aushärtung durch Wärme beeinflußt werden kann, etwa in der Weise, daß das Laminat vor der Aufrollung nicht gekühlt wird und es so durch die Eigenwärme zu einer Verkürzung der Aushärtzeit kommt.

Aufgabe der Erfindung ist die Schaffung einer Verfahrensweise, mit der erreicht wird, daß die Aushärtzeit zum einen erheblich verringert bzw. beschleunigt wird, die Abkühlgeschwindigkeit der Coils verlangsamt und vergleichmägigt wird, wobei gleichzeitig eine einfache Handhabung ebenso gewährleistet sein soll wie eine optimale Energieausnutzung.

Diese Aufgabe wird bei einen Verfahren der eingangs bezeichneten Art gemäß der Erfindung dadurch gelöst, daß die Coils zur Aushärtung und zur beschleunigten Verfestigung der Klebeverbindung zwischen Metall- und Kunststoffolie etwa 48 Stunden auf einer im wesentlichen konstanter Abgabetemperatur von ca. 60 - 80°C aus der Kaschieranlage gehalten werden.

Die Erfindung nutzt zur Beschleunigung der Aushärtung, zur Verbesserung der Klebeverbindung, zur Verringerung der Lagerkapaazität und zur Qualitätssteigerung die Abgabetemperatur von ca. 60. 80° C aus der Kaschieranlage, so daß die nach dem Kaschieren vorhandene Eigenwärme der Coils unter sehr geringer Zufuhr von Fremdenergie aufrecht erhalten werden kann. Nachteile, wie sie durch Abschreckvorgänge bei vergleichsweise niedriger Außentemperatur vorkommen können oder unregelmägige Aushärtvorgänge durch ungleichmägiges Abkühlen an der Umgebungstemperatur, vermeidet die Erfindung. Es hat sich gezeigt, daß die erfindungsgemäße Verweilzeit vor etwa 48 Stunden ausreicht, um die erwünschten Qualitätsnormen zu erfüllen. Diese Verweilzeit ist um ein Vielfaches geringer als dies bei der bisher bekannten Vorgehensweise der Fall war, die eingangs näher beschrieben wurde.

Die Erfindung sieht auch vor, daß die Aushärtung in einem Raum mit im wesentlichen konstanter Temperatur erfolgt. In Verbindung mit der weiter oben angegebenen Lehre, die Abgabetemperatur der Kaschieranlage aufrechtzuerhalten und dies in einem Raum mit im wesentlichen konstanter Temperatur zu tun, wird besonders einfach erreicht. die Zufuhr von Fremdenergie bei entsprechender Wärmeisolierung gering zu halten.

Die Erfindung ist nachstehend anhand derZeichnung beispielsweise näher erläutert. Diese zeigt in
Fig. 1 eine Seitenansicht einer ersten Variante einer Vorrichtung zur Durchführung des Verfahrens,
Fig. 2 eine Aufsicht gemäß Pfeil II in Fig. 1,
Fig. 3 in verkleinertem Maßstab eine Seitenansicht einer Aufsicht, einer Ansicht und einem Schnitt durch eine Gesamtvorrichtung nach dem ersten Ausführungsbeispiel sowie in
Fig. 4 eine Seitenansicht der Vorrichtung zur Durchführung des Verfahrens nach einerzweiten Ausführungsvariante.

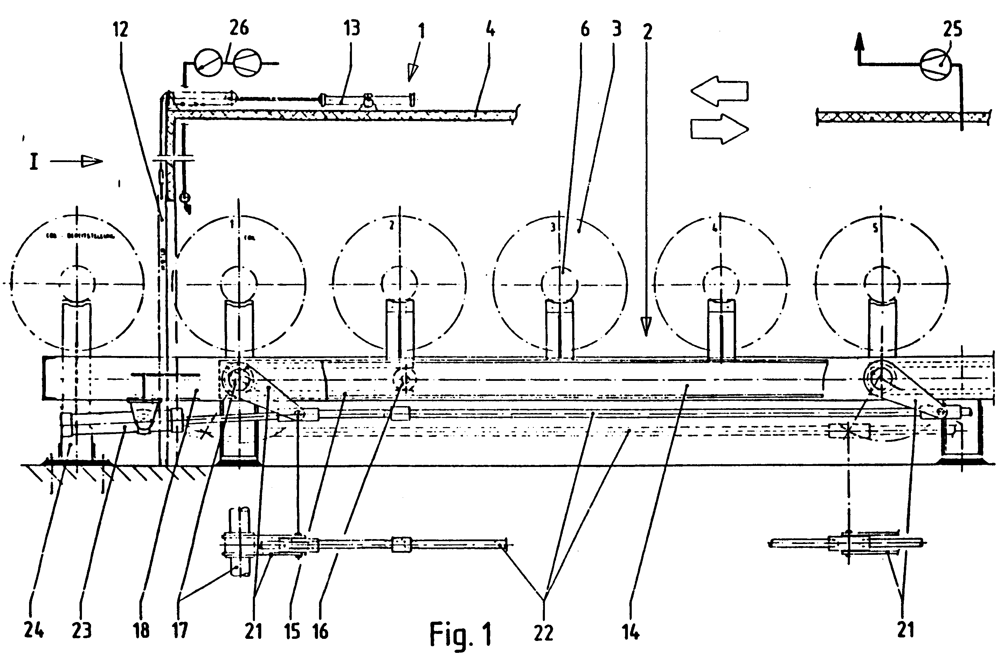

Die allgemein mit 1 bezeichnete Vorrichtung nach dem Ausführungsbeispiel gemäß Fig. 1 - 3 besteht aus einer im wesentlichen U-förmig angeordneten Fördereinrichtung 2 für z. B. zu Coils 3 aufgewickelte kunststoffbeschichtete Aluminiumblechbahnen innerhalb eines im wesentlichen wärmedicht ausgebildeten Gehäuses 4.

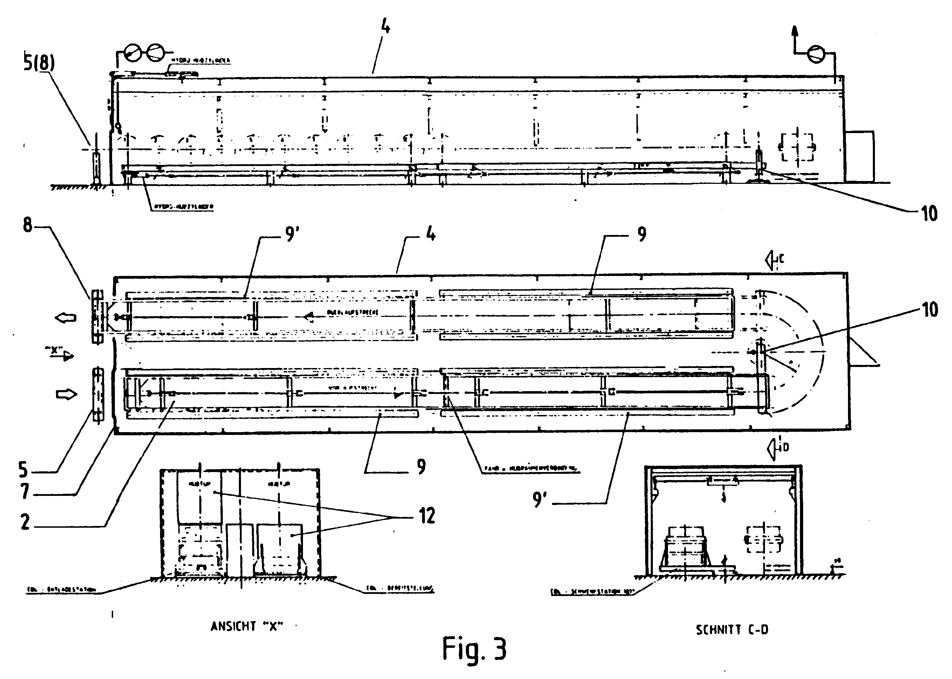

Durch die U-förmige Ausbildung der Fördereinrichtung 2 (s. Fig. 3 Mitte) liegt das mit 5 bezeichnete Aufgabeende für die im Fegelfall mit Wickelhülsen 6 ausgerüsteten Coils 3 auf der gleichen Seite 7 des Gehäuses 4 wie das mit 8 bezeichnete Abgabeende. Die damit verbundenen Vorteile sind weiter oben bereits erwähnt worden.

Wie sich insbesondere aus Fig. 3 ergibt, besteht die Fördereinrichtung 2 aus einzelnen Segmenten 9 gleicher Bauweise (im dargestellten Beispiel je zwei Segmente 9 und 9' auf der Vorlaufstrecke und zwei Segmente 9 und 9' auf der Rücklaufstrecke). Vorlauf-und Rücklaufstrecke sind an ihrer dem Auf- bzw. Abgabeende 5 bzw. 8 abgewandten Seite mit einer Schwenkeinrichtung 10 verbunden, die die Coils 3 auf der Vorlaufstrecke aufnimmt und an die Rücklaufstrecke abgibt. Diese Schwenkeinrichtung kann z. B. mit einem C-Haken 11 ausgerüstet sein.

Es sei noch erwähnt, daß Auf- und Abgabeende des Gehäuses mit Hubtoren 12 ausgerüstet sind, die z. B. über Kettenzüge o. dgl. von einem auf dem Dach befindlichen Hydraulikantrieb 13 betätigbar sind.

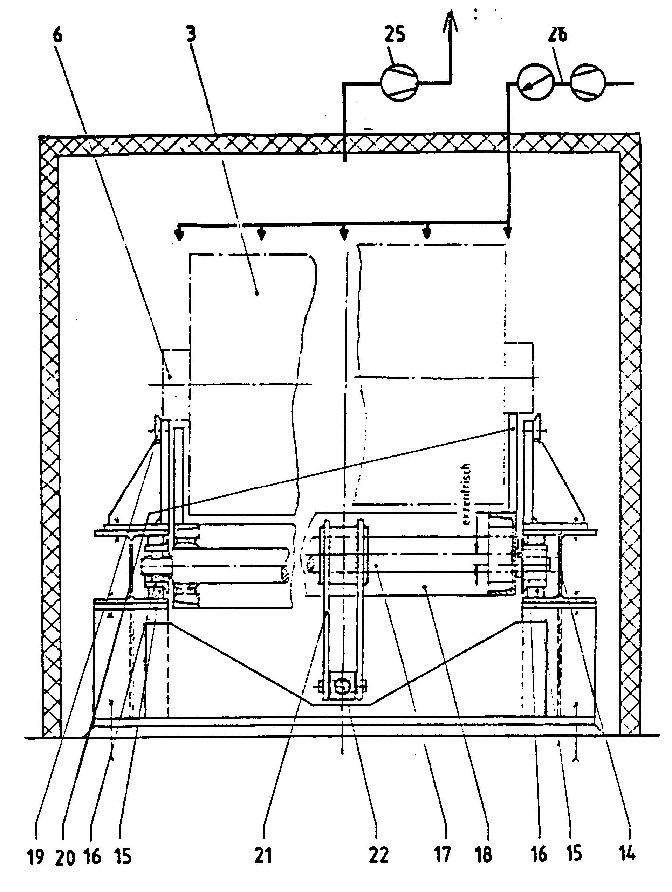

Wie sich insbesondere durch die in Fig. 1 und 2 dargestellten Details ergibt, ist jedes Segment 9 mit einem ortsfesten bzw. stationären Rahmen 14 ausgerüstet. Der Rahmen 14 ist dabei mit Laufschienen 15 für Spurkranzlaufrollen bzw. Laufräder 16 ausgerüstet, die an Exzenterwellen 17 angeordnet sind. Diese Exzenterwellen 17 tragen einen Hub- und Transportrahmen 18.

Am stationären Rahmen 14 sind feststehende Aufnahmeprismen 19 vorgesehen, während am Hub-und Transportrahmen 18 mit diesen bewegbare Aufnahmeprismen 20 für die Coilhülsen 6 vorgesehen sind. In der Mitte der Exzenterwelle 17 zwischen den beiden Laufschienen ist fest an dieser ein Schwenkhebel 21 angeordnet, der von einem Gestänge 22 beaufschlagtwird. Das Gestänge 22 wird von einem Hydraulikzylinder 23 bewegt.

Jedes Segment 9 ist mit wenigstens zwei Exzenterwellen 17 mit einem entsprechenden Schwenkhebel 21 ausgestattet, die beide vom gleichen Gestänge 22 beaufschlagt sind. Jeweils benachbarte, in einer Linie liegende Segmente 9 und 9' sind über das Gestänge 22 miteinander verbunden, so daß bei Betätigung des Hydraulikzylinders 23 synchron die Vorlaufstrecke bzw. Rücklaufstrecke angetrieben wird.

Die Wirkungsweise ist dabei die folgende: Ein Coil 3 wird auf das erste vor dem Gehäuse 4 stehende ortsfeste Aufnahmeprisma, hier mit 24 bezeichnet, abgelegt. Nach Öffnen des Hubtores 12 wird der Kolben des Hydraulikzylinders 23 zurückgezogen, d. h. in Fig. 1 nach links, womit zunächst der bewegbare Hub- und Transportrahmen 18 nach links verschoben wird ohne daß dessen Aufnahmeprismen aufschwenken. Nach Anschlag an einen vorbestimmten Endanschlag wird der Hydraulikkolben noch weiter zurückgezogen, so daß dann alle am Transportrahmen 18 befindlichen Aufnahmeprismen 20 aufgrund der Exzenterlagerung nach oben angehoben werden und damit das außen aufgelegte Coil vom stationären Prisma 29 abheben. Wird nun der Hydraulikkolben vorgeschoben. d. h. in Fig. 1 nach rechts, so verfährt der Hub- und Transportwagen 18 ebenfalls nach rechts und zwar genau um eine Ablagestelle weiter. Dort wird seine Bewegung blockiert und damit der Schwenkhebel 21 bei weiterer Kolbenbewegung aufgeschwenkt, so daß sich aufgrund des Exzenterantriebes das Coil mit seiner Welle absenkt und dann auf den stationären Aufnahmeprismen abgelegt wird. Durch taktweises Hin- und Herverfahren lassen sich nun alle Positionen belegen bzw. die Coils in gewünschte Umlauf- bzw. Vorschubbewegung versetzen.

Es versteht sich von selbst, daß die Schwenkeinrichtung 10 so gesteuert ist, daß sie dem gleichen Takt folgt.

In den Figuren sind noch Abluft- und Umluftgebläse 25 bzw. 26 angedeutet, die mit einer Zusatzheizung ausgerüstet sein können, um die geforderten Temperaturen innerhalb des Gehäuses 4 zu gewährleisten.

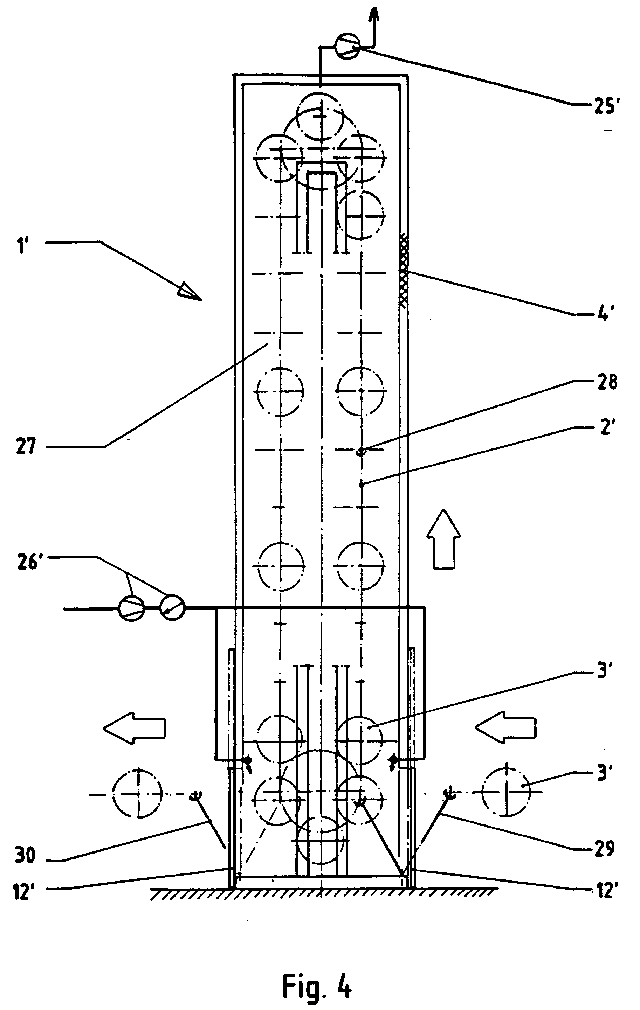

In Fig. 4 ist eine Variante dargestellt, wobei die funktionell mit Fig. 1 übereinstimmenden Bauelemente das gleiche Bezugszeichen tragen, allerdings mit einem Strich versehen. Die dort mit 1' bezeichnete Vorrichtung besteht aus einer Fördereinrichtung 2' zum Fördern von Coils 3' innerhalb eines im wesentlichen wärmedichten Gehäuses 4'.

Die dortige Fördereinrichtung 2' ist als Paternosterförderer 27 ausgebildet mit an nicht näher dargestellten umlaufenden Ketten angeordneten Aufnahmeprismen 28 für die ebenfalls nicht näher dargestellten Welllen der Coils 3' ausgebildet. In Bodennähe sind wiederum Hubtore 12' vorgesehen, eine Warmlufteinrichtung 26' und eine Aufgabeeinrichtung 29, z. B. in Form von Schwenkhebeln, die baugleich ausgeführt sein kann wie die Entnahmevorrichtung 30.

Die Wirkungsweise ist im Prinzip dieselbe wie die beim Ausführungsbeispiel nach Fig. 1. nie spezielle Steuerung ist bereits weiter oben nähererläutertworden.

## Patentansprüche

1. Verfahren zur Aushärt-Behandlung von kunststoffbeschichteten Metallfolien, insbesondere von polypropylen-kaschierten Aluminiumfolien, wobei die Folien zu Coils gewickelt sind,
dadurch gekennzeichnet, daß
die Coils zur Aushärtung und zur beschleunigten Verfestigung der Klebeverbindung zwischen Metall- und Kunstsoffolie etwa 48 Stunden auf einer im wesentlichen konstanten Abgabetemperaturvon ca. 60 - 80°C aus der Kaschieranlage gehalten werden.

2. Verfahren nach Anspruch 1,
dadurch gekennzeichnet, daß
die Aushärtung in einem Raum mit im wesentlichen konstanter Temperatur erfolgt.

## Claims

1. Method for the hardening treatment of plastic- coated metal foils, in particular of polypropylene- laminated aluminium foils, in which the foils are wound into coils,
characterized in that
for hardening and for accelerated strenghtening of the adhesive connection between the metal foil and plastic foil, the coils are kept for approximately 48 hours at a substantially constant temperature of delivery out of the laminating plant, the temperature being approximately 60 - 80°C.

2. Method according to claim 1,
characterized in that
the hardening takes place in a space with a substantially constant temperature.

## Revendications

1. Procédé pour le traitement de durcissement, par cuisson, de feuilles métalliques revêtues de matière plastique, en particulier des feuilles d'aluminium doublées de polypropylène, ces feuilles étant enroulées en des bobines,
caractérisé par le fait que,
en vue du durcissement par cuisson et de la consolidation accélérée de la solidarisation collée entre la feuille métallique et la feuille de ma- tiére plastique, les bobines sont maintenues pendant environ 48 heures, à la sortie de l'installation de contrecollage, à la température de délivrance substantiellement constante d'environ 60 - 80° C.

2. Procédé selon la revendication 1,
caractérisé par le fait que
le durcissement par cuisson s'opère dans un espace dans lequel il règne une température substantiellement constante.
